# EUROPEAN PATENT SPECIFICATION

(11) **EP 2 008 974 B1**
(45) Date of publication and mention of the grant of the patent: **28.07.2010**
(21) Application number: 07111453.2
(22) Date of filing: 29.06.2007
(51) Int. Cl.: C02F 1/44, C02F 1/42, A47L 11/38, B08B 3/02

(54) **Cleaning water purification system**
System zum Reinigen von Reinigungswasser
Système de purification d'eau de nettoyage

(43) Date of publication of application: 31.12.2008
(73) Proprietor: Ekofasad AB, 187 66 Täby (SE)
(72) Inventor: Hållberg, Mats, 192 51 Sollentuna (SE); Ivarsson, Per-Arne, 415 02 Göteborg (SE)
(74) Representative: Pierrou, Mattias

(56) References cited:
- DE-U1- 7 633 702
- JP-A- 5 237 048
- JP-A- 9 220 566
- JP-A- 10 015 356
- JP-A- 61 220 788
- US-A- 4 787 980
- HUTCHESON J.: 'Ultrapure water: systems for microelectronics.' FILTRATION AND SEPARATION vol. 43, no. 5, 01 June 2006, ELSEVIER ADVANCED TECHNOLOGY, OXFORD, GB, pages 22 - 25, XP025235356

## Description

### Field of the invention

The present invention relates to the field of water purification, and more specifically to a method and an apparatus for the provision of water having a conductivity of 3 µS/cm or less.

### Background of the invention

Many systems for purifying water exists today. In these systems, a variety of techniques have been utilized to achieve a desired grade of purity. Examples of such techniques are: ion exchange treatment; sub micron filtration; membrane filtration, including reverse osmosis; purification using ultra violet light; purification comprising addition of chemicals, including purification using ozone; electrodeionization; membrane distillation and distillation/evaporation.

Today, water having a very low conductivity is often produced in connection to pharmaceutical or semiconductor industry.

US 6 562 205 discloses a high-temperature ultra pure water production apparatus comprising an evaporator for treating pretreated water obtained by a primary pure water system comprising a filter, a reverse osmosis unit, a deaerator, and an ion exchanger. Water from the evaporator is then further purified in an ion exchanger. The apparatus produces water having a resistivity of more than 18.10MΩ·cm, corresponding to a conductivity of less than 0.0552 µS/cm.

US 6 187 201 discloses a system for producing ultra pure water having an electrodialysis unit containing a membrane selectively permeable to monovalent cations and a membrane selectively permeable to anions, and a reverse osmosis unit. Water from the electrodialysis unit is stored in a first tank, and pumped from the first tank to the reverse osmosis unit. Purified water from the reverse osmosis unit is stored in a second tank. Discharge from the reverse osmosis unit may be reused.

US 5 250 183 discloses an apparatus for manufacturing ultra pure water containing a decarbonator/degassor for removing carbonic groups, a reverse osmosis unit for removing ions such as Ca²⁺, SO₄²⁻ and Mg²⁺, and a multiple effect evaporator. The decarbonator/degassor and the reverse osmosis unit are arranged upstream the multiple effect evaporator. The apparatus produces water having a resistivity of at least 17MΩ·cm, corresponding to a conductivity of 0.0625 µS/cm or less.

EP 0 254 519 discloses a method for production of ultra purified water comprising: pretreating water in a reverse osmosis device; and evaporating the pretreated water and passing its vapor through a filter to remove fine particles and/or dissolved nonvolatile impurities.

US 5 385 664 discloses an ultra pure water production apparatus containing the following components in series: an ultra filtration or micro filtration device; a first reverse osmosis device; a second reverse osmosis device; a mixed bed ion exchange device; a tank; a low pressure mercury oxidation device; a mixed bed ion exchange device; and an ultra filtration membrane separation device.

US 4 808 287 discloses a method for purifying water comprising the following steps in series: prefiltering the water; passing the water through an activated charcoal filter; passing the water through a second activated charcoal filter; passing the water through a guard filter; pressurizing the water; subjecting the water to reverse osmosis treatment; pressurizing the water; subjecting the pressurized water to a second reverse osmosis treatment; and recycling the brine (the discharge) from the second reverse osmosis treatment to a point before the first reverse osmosis treatment.

JP 05237048 and US 4787980 show other examples of water treatment systems comprising there is osmosis and ion-exchange devices for preparing ultrapure water.

### Summary of the invention

One object of the present invention is to provide an alternative apparatus and method for providing water having a conductivity of 3 µS/cm or less.

Another object of the present invention is to provide an apparatus and method for providing water having a conductivity of 3 µS/cm or less which is easy to operate.

This and other objects of the present invention are achieved by means of an apparatus, a method and a system as characterized by the independent claims. According to the invention, the apparatus for providing water having a conductivity of 3 µS/cm or less comprises: a water inlet; a prefilter for removing particulate solids, the prefilter having an inlet and an outlet; means for routing water from the water inlet to the prefilter; a pump having an inlet and an outlet; means for routing water from the prefilter to the pump;
a recycling water inlet arranged between the water inlet and the pump;
a reverse osmosis device comprising an inlet, a drainage outlet and a deionized water outlet; means for routing water from the pump to the reverse osmosis device; an ion exchange device comprising at least one ion exchange filter, the ion exchange device having an inlet and an outlet; means for routing water from the deionized water outlet to the ion exchange device; a purified water tank comprising an inlet, a purified water outlet and a recycling water outlet, wherein the recycling water outlet is arranged at the top of the purified water tank; means for routing water from the ion exchange device outlet to the purified water tank inlet; and means for routing water from the recycling water outlet to the recycling water inlet; wherein water having a conductivity of 3 µS/cm or less is obtainable from the purified water outlet.

An arrangement "at the top of the purified water tank" refers to an arrangement so as to eliminate substantially all air from the purified water tank when the flow in through the inlet of the purified water tank is bigger than the flow out of the purified water outlet of the purified water tank. In a preferred embodiment, the purified water tank is substantially air-free.

An "ion exchange filter" refers to any ion exchange means comprising ion exchange material, including ion exchange columns. For example, the ion exchange filter may comprise an anionic exchanger bed, an cationic exchanger bed and/or a mixed bed.

Further, the method for providing water having a conductivity of 3 µS/cm or less comprises the following steps: (a) prefiltering inlet water for removal of particulate solids; (b) pumping water obtained from step (a) and optionally step (f); (c) subjecting water obtained from step (b) to reverse osmosis, thereby generating a drainage flow and a deionized water flow; (d) subjecting the deionized water flow from step (c) to ion exchange treatment; (e) collecting water resulting from step (d) in an air-free tank; (f) recycling water from the tank of step (e) by subjecting it to at least steps (b)-(e); and (g) obtaining water having a conductivity of 3 µS/cm or less from the tank of step (e).

The invention entails a number of advantages. The inventive apparatus requires only one pump. By starting the only pump required, which is arranged upstream the reverse osmosis device, the complete purification process is started. Consequently, only one on/off switch is required on the apparatus, which makes it easy to operate. The pumping action of the pump is also sufficient for maintaining an overpressure in the purified water tank (the air free tank). Consequently, water from the purified water tank can be recycled to the recycling water inlet arranged upstream the pump, without the aid of a second pump. In contrast, recycling of water from the purified water tank to a recycling water inlet arranged downstream the pump would require a second pump which makes the apparatus more complex and expensive. Arranging the recycling water outlet at the top of the pressurized purified water tank results in a tank substantially free from air. Minimizing the amount of air in the purified water tank is essential for maintaining the conductivity of the water at a low level. Further, the continuous recycling of water allows for continuous removal of impurities resulting from the components of the apparatus. The man skilled in the art understands that the same benefits also concerns the methods and uses of the invention.

Preferable embodiments of the invention are characterized by the dependent claims or itemized embodiments.

In one embodiment of the invention, water having a conductivity of 1 µS/cm or less, such as 0.5 µS/cm or less, is obtained.

In a preferable embodiment of the invention, water having a conductivity of 0.1 µS/cm or less, such as 0.08 µS/cm or less, is obtained.

Water having a conductivity of less than 0.07 µS/cm have been prepared according to the invention.

For example, at least part of the pump may be of acid-proof stainless steel or titanium. It is beneficial to use such materials, because they do not substantially increase the conductivity of the water.

In one embodiment of the invention, the means for routing water from the deionized water outlet to the ion exchange device comprises: a second reverse osmosis device; means for routing water from the deionized water outlet to the second reverse osmosis device; and means for routing water from the second reverse osmosis device to the ion exchange device. Arranging two reverse osmosis devices in series is one way to obtain water with low conductivity according to the invention.

In one embodiment of the invention, the ion exchange device comprises at least two ion exchange filters, wherein two ion exchange filters are arranged in series. In one embodiment of the invention, the ion exchange device comprises at least three ion exchange filters, wherein a first and a second ion exchange filter are arranged parallel to each other and upstream a third ion exchange filter. Such embodiment may comprise a switching means for directing water through either the first or the second filter. As an example, the switching means may comprise flow regulators arranged upstream each of the first and the second ion exchange filter. Consequently, it is possible to exchange one of these two filters for a new one during operation. The load on the first and second filters is much heavier than on the third filter because they are arranged upstream of the third. As an example, during extensive use, exchange of the first or second filter may typically be required once a month, while exchange of the third filter may only be required once a year or less frequently. For example, at least one of the ion exchange filters comprises a mixed bed. As an example, all ion exchange filters comprises a mixed bed.

In one embodiment of the invention, the ion conductivity of the water is measured downstream the ion exchange filter, for example by an ion conductivity measuring means. For example, the means for routing water from the ion exchange device outlet to the purified water tank inlet may comprise such ion conductivity measuring means.

As an example, in the embodiment wherein the ion exchange device comprises a first, second and third ion exchange filter, the ion conductivity of the water may be measured at at least two positions: i) downstream the first and second filter, but upstream the third filter; and *ii*) downstream the third filter. By measuring at these two positions, an operator can, besides making sure that the conductivity of the obtained water is sufficiently low, getting necessary information on when to exchange the different filters and/or when to switch between the first and second filter. For example, if an ion conductivity measuring means in position i) shows a too high conductivity and the switching means is set so as to use the first filter, an operator may set the switching means so as to use the second, parallel, filter instead, and continue operation almost without interruption. The operator may then, directly or later, exchange the first filter.

In one embodiment of the invention, the means for routing water from the prefilter to the pump comprises: a prefiltered water tank, the prefiltered water tank containing the recycling water inlet and further containing a prefiltered water inlet, and an outlet; means for routing water from the prefilter to the prefiltered water tank; and means for routing water from the prefiltered water tank to the pump. Such arrangement of a prefiltered water tank facilitates collection of non-deionized water and recycled water and makes the operation of the apparatus less dependent on the flow rate and pressure of the inlet water.

In one embodiment, the apparatus is adapted to use municipal water as inlet water. For example, the apparatus may comprise means for connection to a fire hydrant. Such means may be arranged at the water inlet. The person skilled in the art understands what such means may be. It is beneficial to use municipal water because it is normally available close to the washing site.

One embodiment of the invention relates to the use of the apparatus for providing water for washing away dirt from a façade wall.

Throughout the description and the claims, a "façade wall" refers to the part of a façade of a building not being of glass, i.e. not being windows.

Further, throughout the description and the claims, "dirt" refers to materials which are unwanted on a façade wall, e.g. deposits, such as calcium sulfate, soot, dust, organic material, such as rubber particles and biological material, such as, algae and mould, comprising claudiosporium, and heavy metals.

Water having a conductivity of 3 µS/cm or less, has surprisingly been found to possess excellent properties for façade wall washing. Without being bound to any specific theory, the inventive water has very few dissolved ions and consequently, a high capacity of dissolving salts and hydrates. As an example, the inventive water is very reactive towards gypsum, CaSO₄*2H₂O, which is often formed on façade walls comprising calcium carbonate, CaCO₃, such as façade walls comprising limestone, after exposure to acidic rain comprising sulphate. Further, it is contemplated that the inventive water destroys the cells of algae, such as green algae, by osmosis: the hypotonic purified water moves across the cell membranes into the cells to balance the difference in salt concentrations, which results in such a high internal pressure that the cells explodes.

For example, water having a conductivity of 1 µS/cm or less, such as 0.5 µS/cm or less, provided by the apparatus is used for washing away dirt from a façade wall.

Preferably, water having a conductivity of 0.1 µS/cm or less, such as 0.08 µS/cm or less, provided by the apparatus is used for washing away dirt from a façade wall. It was noted by the inventors that water having such low conductivity has unexpectedly good washing properties. The washing effect increased significantly when the conductivity of the cleaning liquid was brought down to 0.1 µS/cm or less.

In one embodiment, the method for providing water having a conductivity of 3 µS/cm or less further comprises the following step between (a) and (b): (aa) collecting water resulting from step (a) and step (f); wherein step (b) comprises pumping collected water from step (aa). Such collection of non-deionized water and recycled water makes the method less dependent on the flow rate and pressure of the inlet water.

In one embodiment of the method, at least part of the inlet water is municipal water. Benefits of using municipal water are described above.

One embodiment of the invention relates to the use of water obtained in step (g) of the method for washing away dirt from a façade wall. Benefits of using the water in such way are described above.

In one embodiment, the washing comprises the following steps: (h) cleaning the façade wall, wherein the cleaning comprises application of a cleaning liquid onto the façade wall, and the cleaning liquid is the water obtained in step (g); and (i) allowing used cleaning liquid from step (h) containing dirt to leave the façade wall. Benefits of using the water in such way are described above.

In one embodiment of the invention, the application of cleaning liquid of step (h) comprises continuous application of the cleaning liquid in the form of a mist for a period of 3 hours or less. Using the cleaning liquid of the invention, a good washing result is obtained already after less than 3 hours when the cleaning liquid is applied in the form of a mist. For example, the period may be as short as 10-60 minutes. For example, the mist may be provided by nozzles, which are well known to the person skilled in the art. Shorter application times are beneficial because they lead to lower costs due to lower water consumption and lower labor and construction costs.

In one embodiment of the invention, step (h) comprises a first application of the cleaning liquid, and, after a predetermined period of time, a second application of the cleaning liquid. For example, the predetermined period of time may be 1-24 hours, such as 1-12 hours. When using two separate applications, the water from the first application is given time to dissolve the dirt on the façade wall, and subsequently, the water from the second application washes away the dirt-containing water from the first application. Two separate applications are beneficial because they require less water than one corresponding continuous application. As an example, a brushing of the façade wall may be performed between the first and the second application of cleaning liquid. Alternatively, or as a complement, brushing may be performed simultaneously with the first or second application. Brushing may further facilitate the removal of dirt from the façade wall. Appropriate brushes are well known to the skilled person.

In one embodiment of the invention, the cleaning liquid is applied to the façade wall with a flow of at least 20 liters/minute.

In one embodiment of the invention, the washing comprises the steps of: (j) collecting the used cleaning liquid of step (i); and (k) purifying the collected, used cleaning liquid of step (j). Collecting and purifying the used cleaning liquid prevents hazardous components comprised in the dirt from the façade wall to be released to the surroundings, such as the surrounding nature or the sewage system. For example, step (j) may involve collecting the used cleaning liquid in a storm drain or street inlet located in the vicinity of the façade wall, and step (k) may involve purifying at the washing site. Collecting the used cleaning liquid in a nearby storm drain is very convenient, because the water leaving the façade wall is naturally directed to such storm drain and no extra water directing means are required. By purifying the collected, used cleaning liquid at the washing site, no transportation of used cleaning liquid is needed and the purified liquid may be discharged at the washing site, for example in the same storm drain as in which the used cleaning liquid was collected.

By "at the washing site" is meant in the vicinity of the façade wall, such as within 100 meters of the façade wall, such as within 50 meters of the façade wall, such as within 30 meters of the façade wall.

One embodiment of the invention is comprising the step of: (I) recycling the purified, used cleaning liquid of step (k) such that it constitutes at least part of the inlet water of step (a). By recycling at least part of the purified, used cleaning liquid, the water consumption of a façade wall washing is decreased.

In one embodiment of the invention, the dirt includes one or more of the following: algae, green algae and calcium sulphate compounds.

As an example, the dirt includes algae. The inventors have found that the washing method of the invention effectively removes algae, which are one of the most frequent types of dirt and also, traditionally, being very difficult to wash away.

As another example, the dirt includes calcium sulphate compounds, such as gypsum, CaSO₄*2H₂O. The inventors have found that the washing method of the invention effectively removes calcium sulphate compounds, which are also one of the most frequent types of dirt on façade walls. Calcium sulphate compounds are mainly formed on the surface of façade walls comprising calcium carbonate, such as façade walls comprising sandstone, limestone, travertine, marble, calcareous sandstone, cement, concrete, and rendering or facing plaster.

In one embodiment of the invention, the façade wall comprises calcium carbonate, such as at least 5 % calcium carbonate (w/w), such as at least 10 % calcium carbonate (w/w), such as at least 15 % calcium carbonate (w/w), such as at least 20 % calcium carbonate (w/w), such as at least 25 % calcium carbonate (w/w), such as at least 30 % calcium carbonate (w/w), such as at least 35 % calcium carbonate (w/w), such as at least 40 % calcium carbonate (w/w), such as at least 45 % calcium carbonate (w/w), such as at least 50 % calcium carbonate (w/w), such as at least 55 % calcium carbonate (w/w), such as at least 60 % calcium carbonate (w/w), such as at least 65 % calcium carbonate (w/w). Due to above-mentioned reasons, the invention is particularly suitable for washing façade walls comprising calcium carbonate.

One embodiment of the invention relates to a system for handling façade cleaning liquids, comprising a cleaning liquid apparatus, being the above-mentioned apparatus for providing cleaning liquid consisting of water having a conductivity of 3 µS/cm or less; and a waste water apparatus for purifying used cleaning liquid.

Traditionally, the waste water resulting from façade wall washings have been let out to the drainage system without purification. However, such waste water commonly contains contaminants which are harmful to humans, such as to the operator(s) performing the washing, and to the environment. For example, the waste water may contain heavy metals, such as heavy metals resulting from the pigments of eroding façade paint, such as linoleum based paint. Examples of pigments comprising heavy metal compounds are cadmium yellow (cadmium sulfide), cadmium red (cadmium selenide), cadmium orange (an intermediate cadmium sulfoselenide), chrome green, lead white, zinc white, cobalt blue, uranium yellow and copper sulfate. Further, the waste water resulting from façade walls which have been exposed to exhaust gases from vehicular traffic, such as façade walls in urban environments, may contain particularly high levels of lead and lead compounds. Further, the used cleaning liquid may contain organic compounds harmful to humans and the environment. Accordingly, in one embodiment, the waste water apparatus comprises a purification device for removing particles, organic compounds and heavy metals from the used cleaning liquid.

As an example, the purification device comprises: a prefilter for removing particulate matter; an organic compounds removing device; and an ion exchange filter for removing heavy metals, wherein: the prefilter is arranged upstream the organic compounds removing device and the ion exchange filter; and the organic compounds removing device and the ion exchange filter may be the same or different. As an example, the organic compounds removing device is comprising activated carbon. As an example, the purification device further comprises a chelating ion exchange filter for removing heavy metals arranged downstream the prefilter. The chelating ion exchange filter further reduces the amount of heavy metal to very low levels, which may be necessary to fulfill environmental policy requirements.

In one embodiment of the system according to the invention, the waste water apparatus and the cleaning liquid apparatus are functionally connected so that purified; used cleaning liquid from the waste water apparatus can be recycled and used as input to the cleaning liquid apparatus for providing cleaning liquid. Such recycling reduces the water consumption of a façade washing operation.

In one embodiment, the waste water apparatus comprises: a collecting device for collecting used cleaning liquid, wherein the collecting device is adapted to being arranged in a storm drain; a pump device for pumping collected, used cleaning liquid from the collecting device to the purification device. The benefits of arranging a collecting device in a storm drain are mentioned above. As an example, the collecting device comprises a trough and a flange for maintaining the trough in a storm drain.

In one embodiment, the system according to the invention further comprises means for routing purified, used aqueous cleaning liquid obtainable from the purification device to a storm drain, by-passing the collecting device. Such arrangement is very convenient because the same storm drain may be used for both collecting and drainage purposes. "By-passing the collecting device" refers to letting liquid pass down into the storm drain without being collected by any collecting device arranged therein.

In one embodiment, the invention relates to façade wall washing system comprising a cleaning liquid apparatus, being the above-mentioned apparatus for providing cleaning liquid consisting of water having a conductivity of 3 µS/cm or less; and cleaning liquid application means. The benefits of washing façade walls with the water having a conductivity of 3 µS/cm or less are mentioned above. Suitable application means are well known to the person skilled in the art.

In one embodiment of the invention, any one of the above-mentioned embodiments of a system may be arranged in a movable container.

In one embodiment of the invention any one of the above-mentioned embodiments of a system may be arranged in a vehicle.

In one embodiment of the invention, any one of the above-mentioned embodiments of a system may be arranged on a cart.

By making a system according to the invention movable or mobile in a convenient way, the total time required for a washing operation may be reduced. Also, such movable or mobile unit is easy to store or park between operations.

Further objects and advantages of the present invention will be discussed below by means of exemplifying embodiments.

### Brief description of the drawings

In the following detailed description, reference will be made to the accompanying drawings, of which:
Fig 1 schematically shows an embodiment of an apparatus for providing water having a conductivity of 0.08 µS/cm or less;
Fig 2 schematically shows an embodiment of an ion exchange device;
Fig 3 schematically shows another embodiment of an apparatus for providing water having a conductivity of 0.08 µS/cm or less;
Fig 4 shows a schematic representation of an embodiment of a waste water apparatus for purifying used cleaning liquid, including a cross-sectional view of an embodiment of a collecting device;
Fig 5 schematically shows a cross-sectional view of an embodiment of a used cleaning liquid collecting device for arrangement in a storm drain; and
Fig 6 schematically shows a cross-sectional view of another embodiment of a used cleaning liquid collecting device for arrangement in a storm drain.

### Example embodiments

The embodiments presented below are provided as examples and are not limiting to the invention.

### 1. An apparatus for providing water having a conductivity of 0.08 µS/cm or less

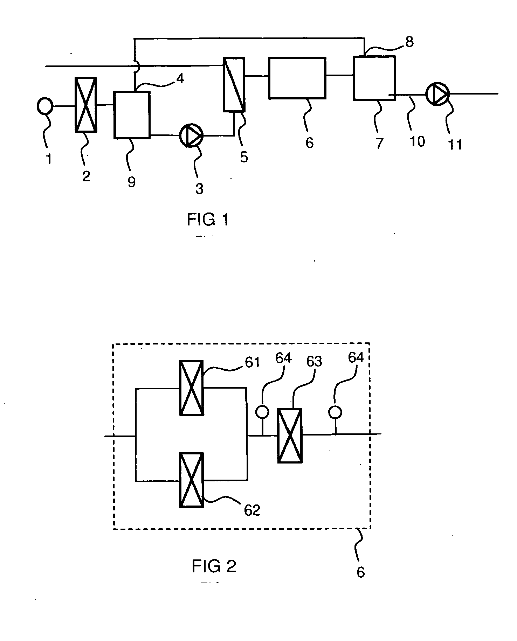

With reference to figures 1 and 2, the apparatus comprises the following components: a water inlet 1; a prefilter 2 for removing particulate solids, the prefilter 2 having an inlet and an outlet; means for routing water from the water inlet 1 to the prefilter 2; a prefiltered water tank 9, the prefiltered water tank containing a recycling water inlet 4 and further containing a prefiltered water inlet, and an outlet; means for routing water from the prefilter 2 to the prefiltered water tank 9; a pump 3 having an inlet and an outlet; means for routing water from the prefiltered water tank 9 to the pump 3; a reverse osmosis device 5 comprising an inlet, a drainage outlet and a deionized water outlet; means for routing water from the pump 3 to the reverse osmosis device 5; an ion exchange device 6 comprising a first and second ion exchange filter 61, 62 arranged parallel to each other and upstream a third ion exchange filter 63, the ion exchange device 6 having an inlet and an outlet; means for routing water from the deionized water outlet to the ion exchange device 6; a purified water tank 7 comprising an inlet, a purified water outlet and a recycling water outlet 8, wherein the recycling water outlet 8 is arranged at the top of the purified water tank 7; means for routing water from the ion exchange device 6 to the purified water tank 7; and means for routing water from the recycling water outlet 8 to the recycling water inlet 4; wherein water having a conductivity of about 0.08 µS/cm or less is obtainable from the purified water outlet.

Conductivity measuring means 64 are arranged at two positions: *i*) downstream the first and second filter 61, 62, but upstream the third filter 63; and ii) downstream the third filter 63.

The purification grade of the prefilter 1 is 1 µm with a β-value of 80-90 %. The pump is made of acid-proof stainless steel.

The inlet 1 is adapted to being connected to a fire hydrant. Municipal water provided by a fire hydrant in Stockholm, Sweden has a conductivity of about 200-300 µS/cm. After passing the reverse osmosis device 5, the conductivity of the water is about 1-5 µS/cm. After the first or second ion exchange filter 61, 62, the conductivity is about 0.1 µS/cm, and after the third ion exchange filter, about 0.06 - 0.07 µS/cm. The final conductivity depends e.g. on the temperature of the water.

For the cleaning of a façade wall, the purified water outlet of the purified water tank 7 may be connected to a hose 10. To minimize the hose's 10 contribution of ions to the cleaning liquid, i.e., the purified water, the inside of the hose 10 is made of PVC, which is a beneficial hose material in that aspect. At least one pump 11 is arranged on the hose 10 to pressurize the cleaning liquid for application on a façade wall. For example, additional hoses may be connected to the purified water outlet. Additional pumps may be arranged on these hoses, providing water at different pressures. The hose 10 is connected to application means for application of the cleaning liquid to a façade wall, such as nozzles.

### 2. An apparatus for providing water having a conductivity of 0.08 µS/cm or less

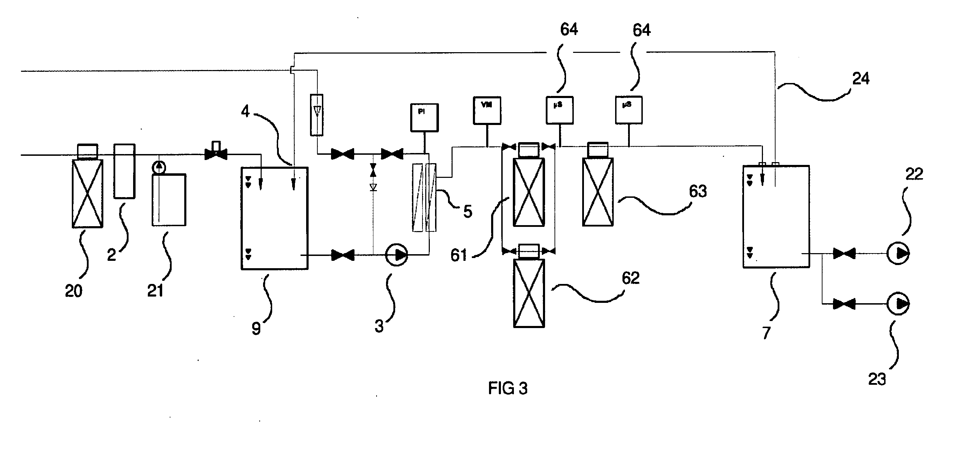

With reference to figure 3, water is provided at the inlet (not shown) and downstream the inlet are arranged in series: an activated carbon filter 20, such as a filter from Norit; a particle filter 2, such as a 5 µm particle filter, such as a filter from Osmonics; an anti-scalant dosing device 21, such as Nalco 191; a flow regulator; and an open tank 9, such as a tank essentially made of polyethylene. Downstream an outlet of the open tank 9 are arranged in series: a flow regulator; a pump 3, such as a pump made out of stainless steel, such as SS316; a reverse osmosis device 5, such as a RO-filter unit having 99 % rejection, such as DOW BW30; two parallel ion exchange filters 61, 62, such as ion exchange filters comprising a mixed bed, such as Rohm & Haas MB20 filters, each having a flow regulator arranged at their inlet and outlet; a conductivity measuring device 64; an ion exchange filter 63, such as an ion exchange filter comprising a mixed bed, such as a Rohm & Haas MB20 filter; a conductivity measuring device 64; and a closed tank 7, such as a tank made essentially of reinforced polypropylene. Downstream a waste water outlet of the reverse osmosis device 5 is arranged a waste water return. Between two flow regulators arranged on the waste water return is a connection to a point upstream the pump 3, but downstream the flow regulator downstream the open tank 9. A closed tank outlet arranged at the top of the closed tank 7 is connected to a recycling water inlet 4 of the open tank 9 through a recirculation pipe 24.

Downstream an outlet arranged at the lower part of the closed tank 7 may, for the purpose of cleaning a façade wall, two separate pipes be arranged, wherein one is having a flow regulator and downstream of that, a low pressure pump 22, such as a pump from Grundfos, and the other is having a flow regulator and downstream of that, a high pressure pump 23, such as a Cat pump.

Water pipes leading clean water, such as water pipes arranged downstream the reverse osmosis device, are made of polypropylene. Other water pipes are made of PVC.

### 3. A waste water apparatus for purifying used cleaning liquid

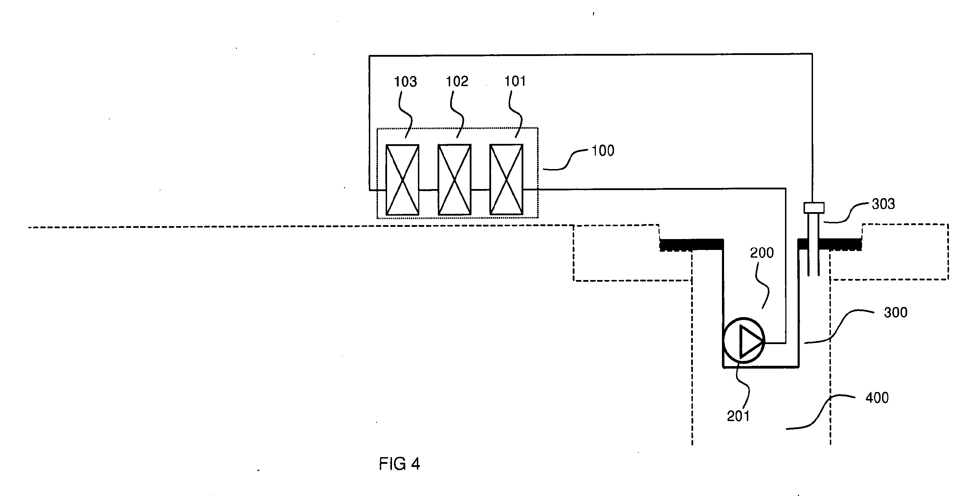

With reference to figure 4, an embodiment of a waste water apparatus for purifying used cleaning liquid comprises a collecting device 300 adapted to being arranged in a storm drain 400. As an example, used cleaning liquid leaving a façade wall is naturally directed the storm drain 400 and collected in the collecting device 300 being arranged therein. The apparatus comprises a pumping device 200 comprising a pump 201 which is arranged inside the collecting device 300. A regulator starting the pump 201 when at least the inlet of the pump 201 is covered with water may be arranged at the pump. A purification device 100 is arranged downstream the pumping device 200 such that collected, used cleaning liquid may be pumped from the collecting device 300 to the purification device 100. The purification device 100 comprises, arranged in series: a prefilter 101, such as a particle filter, such as a 10-500 µm particle filter, such as a 50-150 µm particle filter, preferably a 50 µm particle filter, or alternatively, a 100 µm particle filter; an organic compounds removing device, such as a device comprising activated carbon, such as a device comprising activated carbon and ion exchange material 102, such as a device comprising activated carbon and ion exchange material for removal of heavy metals; and an ion exchange filter, such as a chelating ion exchange filter 103 for removing heavy metals. An outlet of the purification device 100 is connected to discharge means 303 arranged on the collecting device 300. The discharge means 303 may route purified, used aqueous cleaning liquid from the purification device 100 through a storm drain 400 to the sewer, thereby by-passing the collecting device 300 arranged in the storm drain 400.

### 4. Used cleaning liquid collecting device for arrangement in a storm drain

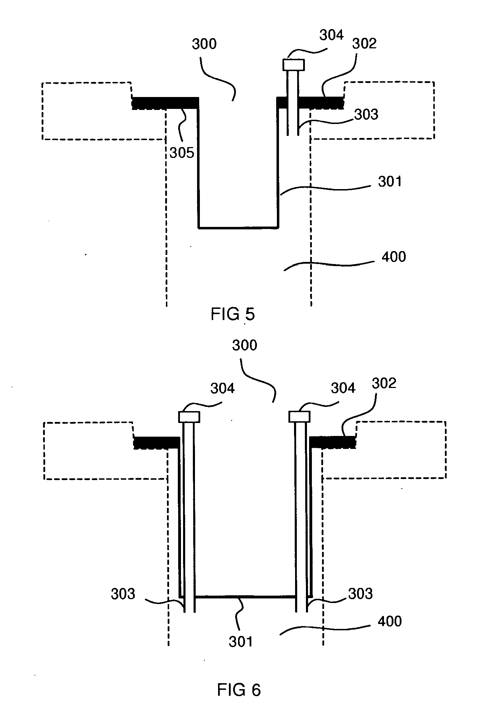

With reference to figures 5 and 6, an embodiment of the collecting device 300 comprises a trough 301 and a flange 302 for maintaining the trough 301 in a storm drain 400. When the collecting device 300 is arranged in the storm drain 400, the flange 302 rests upon the same surface (the contact surface) as a storm drain lid or grating does when covering the storm drain 400. The flange has a lower part 305, wherein at least part of the lower part is being in contact with the contact surface when the collecting device 300 is arranged in a storm drain 400. A packing, such as a rubber packing, (not shown) may be provided on the lower part for preventing that water leaks into the storm drain. A pump (not shown) for pumping used cleaning liquid collected in the trough 301 to a purification device (not shown) may be arranged inside the trough 301. At least one pipe 303 is arranged at the flange 302 or trough 301 so that liquids can flow through the collecting device 300 down the storm drain 400 to the sewer. Each pipe 303 has a upper and lower opening, wherein the lower opening, when the collecting device 300 is arranged in a storm drain 400, is facing the inside of the storm drain 400 and the upper opening is opposite to the lower opening facing open air. A connecting means 304 for connecting a pipe 303 to a hose (not shown) is arranged at the upper opening of the pipe(s) 303. For example, the hose(s) may, at its (their) other end, be connected to the purification device (not shown) and/or another apparatus producing discharge water.

While the invention disclosed herein has been described by means of specific embodiments and applications thereof, numerous modifications and variations could be made therein by those skilled in the art without departing from the scope of the invention, which is defined by the appended claims.

## Claims

1. An apparatus for providing water having a conductivity of 3 µS/cm or less, comprising:
a water inlet (1);
a prefilter (2) for removing particulate solids, said prefilter (2) having an inlet and an outlet;
means for routing water from said water inlet (1) to said prefilter (2);
a pump (3) having an inlet and an outlet;
means for routing water from said prefilter (2) to said pump (3);
a recycling water inlet (4) arranged between said water inlet (2) and said pump (3);
a reverse osmosis device (5) comprising an inlet, a drainage outlet and a deionized water outlet;
means for routing water from said pump (3) to said reverse osmosis device (5);
an ion exchange device (6) comprising at least one ion exchange filter, said ion exchange device (6) having an inlet and an outlet;
means for routing water from said deionized water outlet to said ion exchange device (6);
a purified water tank (7) comprising an inlet, a purified water outlet and a recycling water outlet (8), wherein said recycling water outlet (8) is arranged at the top of said purified water tank (7);
means for routing water from said ion exchange device (6) to said purified water tank (7); and
means for routing water from said recycling water outlet (8) to said recycling water inlet (4);
wherein said water having a conductivity of 3 µS/cm or less, is obtainable from said purified water outlet and said pump (3) is sufficient for maintaining an overpressure in said purified water tank (7).

2. An apparatus according to claim 1, wherein said water is having a conductivity of 0,1 µS/cm or less.

3. An apparatus according to any one of claims 1-2, wherein
said means for routing water from said prefilter (2) to said pump (3) comprises:
a prefiltered water tank (9), said prefiltered water tank (9) containing said recycling water inlet (4) and further containing a prefiltered water inlet, and an outlet;
means for routing water from said prefilter (2) to said prefiltered water tank (9); and
means for routing water from said prefiltered water tank (9) to said pump (3).

4. A system for handling façade cleaning liquids, comprising a cleaning liquid apparatus for providing cleaning liquid consisting of water having a conductivity of 3 µS/cm or less according to any one of claims 1-3; and
a waste water apparatus for purifying used cleaning liquid.

5. A movable container comprising a system according to claim 4.

6. Use of an apparatus according to any one of claims 1-3 for providing water for washing away dirt from a façade wall.

7. A method for providing water having a conductivity of 3 µS/cm or less, comprising the following steps:
(a) prefiltering inlet water for removal of particulate solids;
(b) pumping water obtained from step (a) and optionally step (f);
(c) subjecting water obtained from step (b) to reverse osmosis, thereby generating a drainage flow and a deionized water flow;
(d) subjecting said deionized water flow from step (c) to ion exchange treatment;
(e) collecting water resulting from step (d) in an air-free tank;
(f) recycling water from the top of said tank of step (e) by subjecting it to at least steps (b)-(e); and
(g) obtaining the water having a conductivity of 3 µS/cm or less, from said tank of step (e), wherein the pumping of step (b) is sufficient for maintaining an overpressure in said airfree tank and recycling water from said air-free tank to the pumping of step (b).

8. A method according to claim 7, wherein the water is having a conductivity of 0.1 µS/cm or less.

9. A method according to any one of claims 7-8, further comprising the following step:
(aa) collecting water resulting from step (a) and step (f), wherein step (b) comprises pumping collected water from step (aa).

10. A method according to any one of claims 7-9, wherein said inlet water is municipal water.

## Patentansprüche

1. Vorrichtung zum Bereitstellen von Wasser einer Leitfähigkeit von 3 µS/cm oder weniger, welche das Folgende umfasst:
einen Wassereinlass (1);
einen Vorfilter (2) zum Entfernen von Feststoffteilchen, wobei der Vorfilter (2) einen Einlass und einen Auslass aufweist;
ein Mittel zum Leiten von Wasser von dem Wassereinlass (1) zu dem Vorfilter (2);
eine Pumpe (3), welche einen Einlass und einen Auslass aufweist;
ein Mittel zum Leiten von Wasser von dem Vorfilter (2) zu der Pumpe (3);
einen Rückführ-Wassereinlass (4), welcher zwischen dem Wassereinlass (1) und der Pumpe (3) angeordnet ist;
eine Umkehrosmosevorrichtung (5), welche einen Einlass, einen Entwässerungsauslass und einen Auslass für vollentsalztes Wasser umfasst;
ein Mittel zum Leiten von Wasser von der Pumpe (3) zu der Umkehrosmosevorrichtung (5);
eine lonenaustauschvorrichtung (6), welche mindestens einen lonenaustauschfilter umfasst, wobei die lonenaustauschvorrichtung (6) einen Einlass und einen Auslass aufweist;
ein Mittel zum Leiten von Wasser von dem Auslass für vollentsalztes Wasser zu Ionenaustauschvorrichtung (6);
einen Tank für gereinigtes Wasser (7), welcher einen Einlass, einen Auslass für gereinigtes Wasser und einen Rückführ-Wasserauslass (8) umfasst, wobei der Rückführ-Wasserauslass (8) oben an dem Tank für gereinigtes Wasser (7) angeordnet ist;
ein Mittel zum Leiten von Wasser von der Ionenaustauschvorrichtung (6) zu dem Tank für gereinigtes Wasser (7) und
ein Mittel zum Leiten von Wasser von dem Rückführ-Wasserauslass (8) zu dem Rückführ-Wassereinlass (4);
wobei das Wasser eine Leitfähigkeit von 3 µS/cm oder weniger aufweist, aus dem Auslass für gereinigtes Wasser zu erhalten ist und die Pumpe (3) dafür ausreicht, um in dem Tank für gereinigtes Wasser (7) einen Überdruck aufrecht zu erhalten.

2. Vorrichtung nach Anspruch 1, wobei das Wasser eine Leitfähigkeit von 0,1 µS/cm oder weniger aufweist.

3. Vorrichtung nach einem der Ansprüche 1 bis 2, wobei das Mittel zum Leiten von Wasser von dem Vorfilter (2) zu der Pumpe (3) das Folgende umfasst:
einen Tank für vorgefiltertes Wasser (9), wobei der Tank für vorgefiltertes Wasser (9) den Rückführ-Wassereinlass (4) enthält und ferner einen Einlass für vorgefiltertes Wasser und einen Auslass enthält;
ein Mittel zum Leiten von Wasser von dem Vorfilter (2) zu dem Tank für vorgefiltertes Wasser (9) und
ein Mittel zum Leiten von Wasser von dem Tank für vorgefiltertes Wasser (9) zu der Pumpe (3).

4. System zum Handhaben von Fassadenreinigungsflüssigkeiten, umfassend
eine Reinigungsflüssigkeitsvorrichtung zum Bereistellen einer Reinigungsflüssigkeit, die aus Wasser einer Leitfähigkeit von 3 µS/cm oder weniger gemäß einem der Ansprüche 1 bis 3 besteht; und
eine Abwasservorrichtung zum Reinigen gebrauchter Reinigungsflüssigkeit.

5. Beweglicher Behälter, welcher ein System nach Anspruch 4 umfasst.

6. Verwendung einer Vorrichtung nach einem der Ansprüche 1 bis 3 zum Bereitstellen von Wasser zum Auswaschen von Schmutz aus einer Fassadenwand.

7. Verfahren zum Bereitstellen von Wasser einer Leitfähigkeit von 3 µS/cm oder weniger, welches die folgenden Schritte umfasst:
(a) Vorfiltern von Einlasswasser zum Entfernen von Feststoffteilchen;
(b) Pumpen von Wasser, welches im Schritt (a) und gegebenenfalls im Schritt (f) erhalten wird;
(c) Unterziehen von Wasser, welches im Schritt (b) erhalten wird, einer Umkehrosmose, wodurch ein Entwässerungsstrom und ein Strom aus vollentsalztem Wasser erzeugt wird;
(d) Unterziehen des Stroms aus vollentsalztem Wasser aus Schritt (c) einer Ionenaustauschbehandlung,
(e) Sammeln des aus Schritt (d) resultierenden Wassers in einem Tank, der unter Luftabschluss steht;
(f) Zurückführen von Wasser aus dem oberen Bereich des Tanks des Schrittes (e), indem an diesem mindestens die Schritte (b) bis (e) durchgeführt werden; und
(g) Erhalten des Wassers einer Leitfähigkeit von 3 µS/cm oder weniger aus dem Tank des Schrittes (e), wobei das Pumpen im Schritt (b) dafür ausreicht, um in dem unter Luftabschluss stehenden Tank einen Überdruck aufrecht zu erhalten und Wasser aus dem unter Luftabschluss stehenden Tank in den Pumpvorgang des Schrittes (b) zurückzuführen.

8. Verfahren nach Anspruch 7, wobei das Wasser eine Leitfähigkeit von 0,1 µS/cm oder weniger aufweist.

9. Verfahren nach einem der Ansprüche 7 bis 8, welches ferner den folgenden Schritt umfasst:
(aa) Sammeln von Wasser, das aus dem Schritt (a) und dem Schritt (f) resultiert, wobei der Schritt (b) das Pumpen von gesammeltem Wasser aus dem Schritt (a) umfasst.

10. Verfahren nach einem der Ansprüche 7 bis 9, wobei es sich bei dem Einlasswasser um Leitungswasser der öffentlichen Wasserversorgung handelt.

## Revendications

1. Appareil d'alimentation en eau ayant une conductivité de 3 µS/cm ou moins, comprenant :
une entrée d'eau (1);
un préfiltre (2) pour éliminer les particules solides, ledit préfiltre (2) ayant une entrée et une sortie ;
un moyen d'acheminement de l'eau depuis ladite entrée d'eau (1) vers ledit préfiltre (2) ;
une pompe (3) ayant une entrée et une sortie ;
un moyen d'acheminement de l'eau depuis ledit préfiltre (2) vers ladite pompe (3) ;
une entrée d'eau recyclée (4) agencée entre ladite entrée d'eau (2) et ladite pompe (3) ;
un dispositif d'osmose inverse (5) comprenant une entrée, une sortie de drainage et une sortie d'eau déionisée ;
un moyen d'acheminement de l'eau depuis ladite pompe (3) vers ledit dispositif d'osmose inverse (5) ;
un dispositif d'échange d'ions (6) comprenant au moins un filtre d'échange d'ions, ledit dispositif d'échange d'ions (6) ayant une entrée et une sortie ;
un moyen d'acheminement de l'eau depuis ladite sortie d'eau déionisée vers ledit dispositif d'échange d'ions (6) ;
un récipient d'eau purifiée (7) comprenant une entrée, une sortie d'eau purifiée et une sortie d'eau recyclée (8), dans lequel ladite sortie d'eau recyclée (8) est agencée au sommet dudit récipient d'eau purifiée (7) ;
un moyen d'acheminement de l'eau depuis ledit dispositif d'échange d'ions (6) vers ledit récipient d'eau purifiée (7) ; et
un moyen d'acheminement de l'eau depuis ladite sortie d'eau recyclée (8) vers ladite entrée d'eau recyclée (4) ;
dans lequel ladite eau ayant une conductivité de 3 µS/cm ou moins peut être obtenue à partir de ladite sortie d'eau purifiée et ladite pompe (3) suffit à maintenir une surpression dans ledit récipient d'eau purifiée (7).

2. Appareil selon la revendication 1, dans lequel ladite eau a une conductivité de 0,1 µS/cm ou moins.

3. Appareil selon l'une quelconque des revendications 1 à 2, dans lequel ledit moyen d'acheminement de l'eau depuis ledit préfiltre (2) vers ladite pompe (3) comprend :
un récipient d'eau préfiltrée (9), ledit récipient d'eau préfiltrée (9) contenant ladite entrée d'eau recyclée (4) et contenant en outre une entrée d'eau préfiltrée et une sortie ;
un moyen d'acheminement de l'eau depuis ledit préfiltre (2) vers ledit récipient d'eau préfiltrée (9) ; et
un moyen d'acheminement de l'eau depuis ledit récipient d'eau préfiltrée (9) vers ladite pompe (3).

4. Système de manipulation des liquides de nettoyage des façades, comprenant
un appareil pour liquides de nettoyage fournissant un liquide de nettoyage constitué d'eau ayant une conductivité de 3 µS/cm ou moins selon l'une quelconque des revendications 1 à 3 ; et
un appareil pour eaux usées pour purifier le liquide de nettoyage usagé.

5. Récipient mobile comprenant un système selon la revendication 4.

6. Utilisation d'un appareil selon l'une quelconque des revendications 1 à 3 pour fournir de l'eau pour décaper un mur de façade.

7. Méthode pour fournir de l'eau ayant une conductivité de 3 µS/cm ou moins, comprenant les étapes suivantes :
(a) préfiltration de l'eau d'entrée pour éliminer les particules solides ;
(b) pompage de l'eau obtenue de l'étape (a) et facultativement de l'étape (f) ;
(c) soumission de l'eau obtenu de l'étape (b) à une osmose inverse, produisant ainsi un écoulement de drainage et un écoulement d'eau déionisée ;
(d) soumission dudit écoulement d'eau déionisée de l'étape (c) à un traitement d'échange d'ions ;
(e) collecte de l'eau résultant de l'étape (d) dans un récipient exempt d'air ;
(f) recyclage de l'eau depuis le sommet dudit récipient de l'étape (e) en la soumettant au moins aux étapes (b) à (e) ; et
(g) obtention d'eau ayant une conductivité de 3 µS/cm ou moins, depuis ledit récipient de l'étape (e), dans lequel le pompage de l'étape (b) suffit à maintenir une surpression dans ledit récipient exempt d'air et renvoyer l'eau depuis le récipient exempt d'air vers le pompage de l'étape (b).

8. Procédé selon la revendication 7, dans lequel l'eau a une conductivité de 0,1 µS/cm ou moins.

9. Procédé selon l'une quelconque des revendications 7 à 8, comprenant en outre l'étape suivante :
(aa) collecte de l'eau résultant de l'étape (a) et de l'étape (f), dans lequel l'étape (b) comprend le pompage de l'eau collectée obtenue de l'étape (aa).

10. Procédé selon l'une quelconque des revendications 7 à 9, dans lequel ladite eau d'entrée est de l'eau de ville.
